# EUROPEAN PATENT APPLICATION

(11) **EP 3 037 924 A1**
(43) Date of publication of application: **29.06.2016**
(21) Application number: 15199951.3
(22) Date of filing: 14.12.2015
(51) Int. Cl.: G06F 3/01, G06T 19/00

(54) **AUGMENTED DISPLAY AND GLOVE WITH MARKERS AS US USER INPUT DEVICE**

(30) Priority: 22.12.2014 US 201462095453 P; 08.12.2015 US 201514962526
(71) Applicant: Hand Held Products, Inc., Fort Mill, SC 29707 (US)
(72) Inventor: TODESCHINI, Erik, Morris Plains, NJ 07950 (US)
(74) Representative: Houghton, Mark Phillip

(57) **Abstract**

A method includes obtaining an image of a device having an augmented reality target viewable in the image of the device, generating an augmented reality image, and displaying the augmented reality image on the image of the device responsive to the augmented reality target to provide an augmented reality view.

## Description

### CROSS- REFERENCE TO PRIORITY APPLICATION

This U.S. nonprovisional application claims the benefit of U.S. Patent Application Ser. No. 62/095,453 for an *Augmented Display and User Input Device* (filed December 22, 2014), which is hereby incorporated by reference in its entirety.

### FIELD OF THE INVENTION

The present invention relates displays and user input devices and more particularly, to an augmented display and user input device.

### BACKGROUND

As head mounted, hands-free devices gain traction, a new type of user interface will be needed to provide ease of use and customizability.

### SUMMARY

A method includes obtaining an image of a device having an augmented reality target viewable in the image of the device, generating an augmented reality image, and displaying the augmented reality image on the image of the device responsive to the augmented reality target to provide an augmented reality view.

A machine readable storage device having instructions for execution by a machine processor to perform a method including obtaining an image of a device having an augmented reality target viewable in the image of the device, generating an augmented reality image, and displaying the augmented reality image on the image of the device responsive to the augmented reality target to provide an augmented reality view.

A system including a processor, a camera coupled to provide images to the processor, and a memory coupled to the processor and having a program stored thereon for execution by the processor to obtain an image of a device having an augmented reality target viewable in the image of the device, generate an augmented reality image, and display the augmented reality image on the image of the device responsive to the augmented reality target to provide an augmented reality view.

### BRIEF DESCRIPTION OF THE DRAWINGS

FIG. 1 is a diagram of a glove having virtual reality markers according to an example embodiment.
FIG. 2 is a diagram of a glove having virtual reality images imposed over virtual reality markers according to an example embodiment.
FIG. 3 is a flowchart illustrating a method of providing an augmented reality view of a device having graphics displayed based on targets on the device according to an example embodiment.
FIG. 4 is a method of adjusting the augmented reality image for distortion to ensure that the image is easily viewable by a user.
FIG. 5 is a block schematic diagram of a computer system to implement methods according to example embodiments.

### DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical, and electrical changes may be made without departing from the scope of the present invention. The following description of example embodiments is, therefore, not to be taken in a limited sense, and the scope of the present invention is defined by the appended claims.

The functions or algorithms described herein may be implemented in software or a combination of software and human implemented procedures in one embodiment. The software may consist of computer executable instructions stored on computer readable media or computer readable storage device such as one or more memory or other type of hardware based storage devices, either local or networked. Further, such functions correspond to modules, which are software, hardware, firmware, or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

A device, such as a pair of gloves, may be transformed in an augmented reality view into both display and user input devices. The device being transformed in an augmented reality view is not limited to a glove but may include clothing or other material worn on other parts of the user's body, including but not limited to the wrists and arms. The augmented view of the gloves, for example, allows the user to see application data and graphics on the palm of their hand and transforms their fingers and/or fingertips into touchable buttons. The augmented reality view may be advantageous over information displayed statically on a head mounted display because it is up to the user and not the software when they would like to see information.

By simply looking at their hand, the user interface may be visible when and where desired, and does not otherwise interfere with operations being performed by the user. This may become a very desirable feature of near-eye display systems, as these types of platforms have the ability to be very distracting. The size of the display may also be modulated by how far away from their face the user holds their hand. This just-in-time display could be very useful in use cases where a user uses both of their hands, as there is no physical device to be set down or to get in the way. The back of the glove or even a wrist-covering portion of the glove could also be used as a display to provide viewing flexibility in the case the user has their hands full.

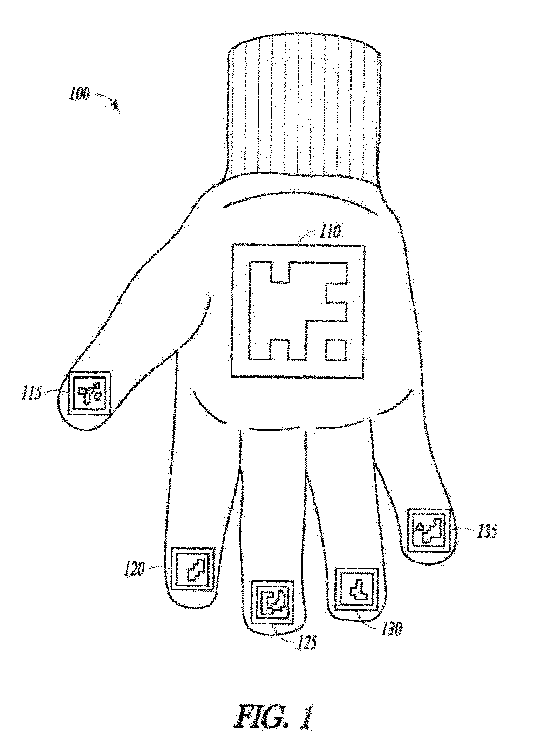

A glove 100 is illustrated in FIG. 1. Multiple augmented reality markers, also referred to as targets 110, 115, 120, 125, 130, 135 for example may be printed, stitched, or attached in any manner onto different areas of the glove 100 or even embedded into different areas of the glove 100. Each target may be a unique augmented reality target. Target 110 may be placed on the palm or back of the glove 100, and serve to identify where to augment a view of the glove 100 with an application display that may convey relevant information to the user. The target 100 both identifies corresponding information for display, and also provides a placement target for positioning the display on an augmented reality view of the glove 100. Targets 115, 120, 125, 130, 135 may serve as identifiers of user input constructs, such as icons for performing functions related to the application. As shown, the targets may be placed on the fingertips of the glove 100. Targets may be placed on the front, side, and/or back portions of the fingers, including the end and/or tip of the fingers. Selected movements of the fingers, such as selected movement of the fingertips, may serve to select the function associated with each target. The selected movement may include movement in a particular direction, such as up, down, or sideways, and/or movement by a selected distance. The selected movement may also include movement to obscure the target. In further embodiments, targets may be provided on other areas of the glove 100, such as the wrist, finger nails, and other areas. Selected movement of a portion of the glove, including these areas, may serve to select the user interface or display function associated with the target.

By using a device equipped with a camera and display, such as a smartphone, tablet, or wearable device (including a head-mounted wearable device) that supports true augmented reality, the user may view their gloved hand through a real time video feed. When one or more of the targets is captured in the images provided by the camera, the augmented view may be generated. In some embodiments, a selected number or percentage of known targets may trigger the display of the augmented view when within the field of view of the camera. Typically, when a target is not within the field of view, no augmented view is generated for the target. As the target, or a predetermined portion thereof, comes into the field of view of the camera an augmented view is generated for the target so that the target may be viewed and selected by the user. The video feed may include a user perspective to each target based on the distortion, such as skew, tilt, barrel, and/or pin-cushion, of the target in the image when compared to a known profile of each target. The perspective may be used to render graphical content directly on top of the target in the exact orientation of the target to make it look as if it were actually projected onto the surface. In other words, as the camera/display device captures the video feed of the device (e.g. glove), the camera/display device looks for an augmented reality target (or marker) on the glove device in a live video feed. When the camera/display device recognizes a target, the camera/display device estimates the user's physical pose to the target by analyzing distance from the user or camera and the distortion (e.g., tilt, skew, and distance) of the target based on the camera view. Based on the distortion, the camera/display device renders the corresponding icon and/or instruction over the target from the same or substantially the same pose within the spherical coordinate system that was computed by analyzing the distortion of the target. Thus, by determining the distortion of the augmented reality target and adjusting the augmented reality image to account for the determined distortion prior to displaying the augmented reality image, the camera/display device may render the augmented reality content (e.g., icons and/or instructions) on the corresponding target in the augmented reality image of the glove device from the perspective of the user based on the computation of the camera/display device's pose to the marker. In this way, the camera/display device recognizes or determines the corresponding augmented icon and/or content from the augmented reality target, and preferably, displays the icon and/or content in the displayed augmented reality image of glove device so that the device user may view the augmented reality icon and/or content from the device user's perspective. That is, if the user of the glove device views a target on the glove device from a certain tilt, skew, and distance, the camera/display device displays the corresponding augmented reality icon and/or content so that the icon and/or content appears at the same or substantially the same tilt, skew, and distance as the target.

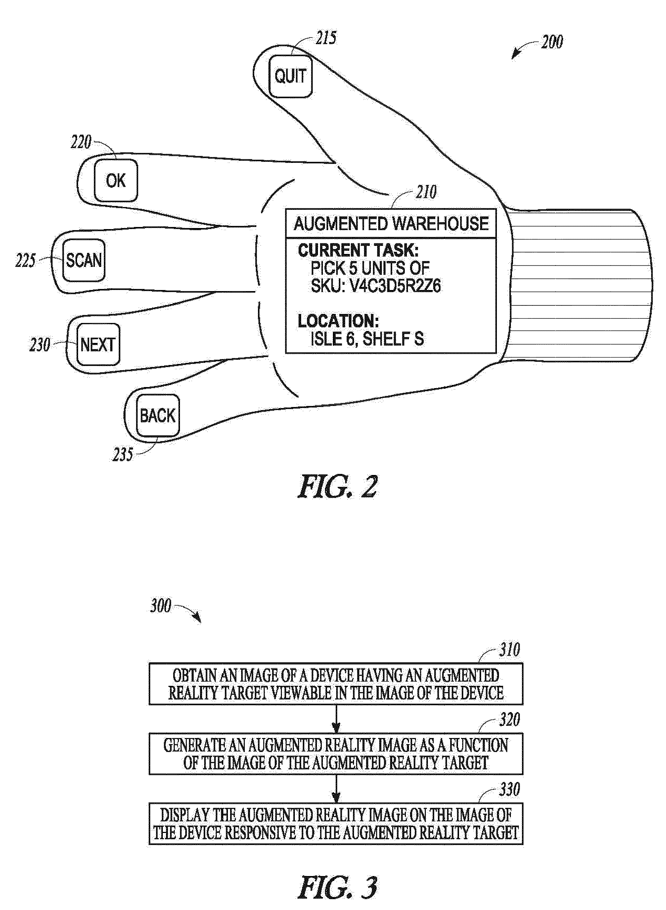

The augmented reality targets or markers may be recognized and overlaid with data pertaining to the business logic of the application as illustrated at 200 in FIG. 2. The target 110 on the palm of the glove 100 results in a display 210 of the data pertaining to the business logic of the application. The targets 115, 120, 125, 130, 135 on the fingertips result in display of clickable buttons or icons 215, 220, 225, 230, 235. These buttons are selectable in one embodiment by detecting if any object, such as a finger, crosses into the line of sight of the marker. In a further embodiment, they may be selected by determining if the corresponding fingertip is moved a selected distance toward or away from the camera of the augmented reality device.

The buttons may be used as input into the business logic and may be customized for any particular operation or application screen. The buttons as shown include a quit button 215, OK button 220, scan button 225, next button 230, and back button 235. In one embodiment, a soft input panel (keypad) may be rendered over one of the targets to define clickable areas for each key. This could facilitate an augmented reality view that includes pin pad or even full QWERTY text entry.

FIG. 3 is a flowchart illustrating a method 300 of providing an augmented reality view of a device having graphics displayed based on targets on the device. At 310, an image of a device having an augmented reality target viewable in the image of the device is obtained. At 320, an augmented reality image is generated. The image may be a screen of information generated by an application running on an augmented reality system, or received from a server or other device running the application. The term "image" may include static images, videos, 3D models, graphics, animations, user interface elements, and other content that may be displayed in an augmented reality view. At 330, the augmented reality system displays the augmented reality image on the image of the device responsive to the augmented reality target.

In some embodiments, the augmented reality image is positioned directly on the augmented reality target on the device, such as a palm or back of a glove. The image may be centered on the target and sized based on the size of the target, such as the same size as the target, or a percentage of the size of the target, either greater or less than 100% of the size of the target. The size may be selected based on user ergonomic considerations, including viewability. In further embodiments, the augmented reality target comprises multiple targets. Displaying the augmented reality image may then comprise displaying multiple images positioned on the multiple targets. At least one of the augmented reality images may give a corresponding target an appearance of an input icon.

The device may be a glove or other item of apparel, such as a shirt, coat sleeve, or wrist band. Selected movement of the shirt, coat sleeve, wrist band, or other item of apparel bearing a target may serve to select the function of targets attached to or embedded therein. In still further embodiments, the targets may be provided on a device that is sheet of paper, plastic, wood, cardboard, or other suitable material for the environment where the user is working. The user may simply hold up the device when desirous of viewing the augmented reality image. In still further embodiments, the targets may be tattooed either temporarily or permanently on a user's hand or other body part or may be adhesive labels affixed to the user's hand or other body part. Note that the target may be visible to the camera, but not otherwise visible to a user in some embodiments.

In one embodiment, input icons may be displayed on a fingertip of the glove. Movement of the fingertip in a selected direction and distance operates as a selection of the input icon. Such a movement may utilize video analytics to detect if the user was making a motion with one finger that might indicate selection of the icon on that finger. Such analytics may include detection of an image of a fingertip getting larger than other fingertips, indicative of a user moving a finger up, toward the camera. Such a motion is a natural motion indicative of selection of the icon. Obscuring the fingertip with another hand or object may also be indicative of selection of the icon. Thus, for example, a once visible target is obscured from the field of view of the camera by another object, or is moved such as by bending the finger to hide the target from the camera, the corresponding icon represented by the target is selected and the software responds to the function (e.g., quit, ok, scan, next, or back) represented by the icon. For example, obscuring the target 120 representing the "OK" user input 220 directs the software to display instructions 210. See FIGs. 1 and 2.

In one embodiment, the method may be embodied in a software development kit. The software development kit may be trainable for any type of augmented reality markers or targets.

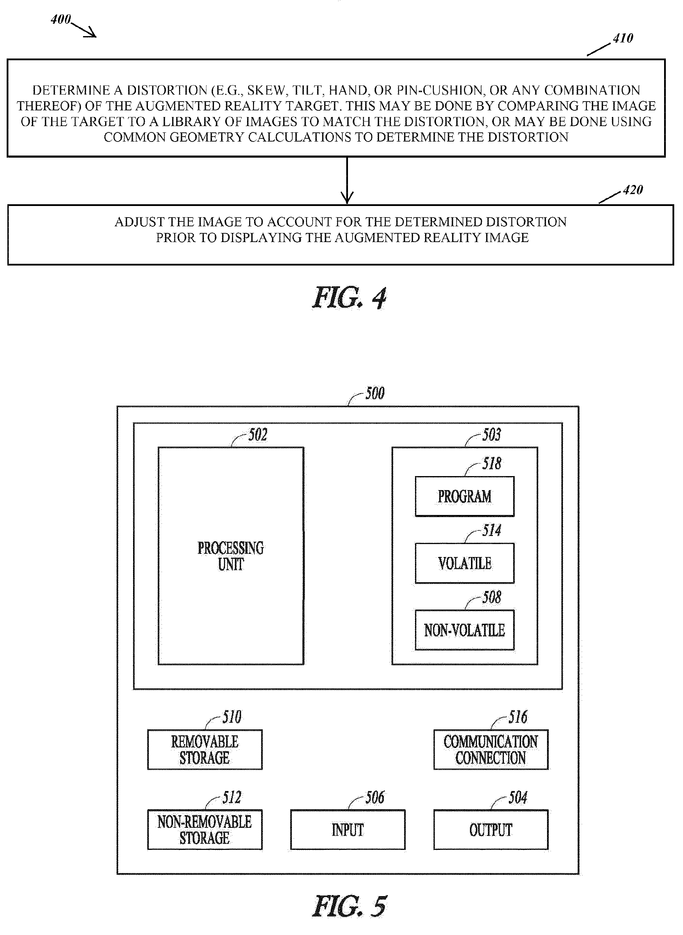

FIG. 4 is a method 400 of adjusting the augmented reality image for distortion to ensure that the image is easily viewable by a user. Distortion may result from skew, tilt, barrel or pin-cushion. At 410, method 400 determines a distortion (e.g., skew, tilt, barrel or pin-cushion or any combination thereof) of the augmented reality target. This may be done by comparing the image of the target to a library of images to match the distortion, or may be done using common geometry calculations to determine the distortion. At 420, the image may be adjusted to account for the determined distortion prior to displaying the augmented reality image. Image stabilization may be provided in further embodiments.

FIG. 5 is a block schematic diagram of a computer system 500 to implement the generation of augmented reality views according to example embodiments. All components need not be used in various embodiments. One example computing device in the form of a computer 500, may include a processing unit 502, memory 503, removable storage 510, and non-removable storage 512. Although the example computing device is illustrated and described as computer 500, the computing device may be in different forms in different embodiments. For example, the computing device may instead be a smartphone, a tablet, smartwatch, or other computing device including the same or similar elements as illustrated and described with regard to FIG. 5. Devices such as smartphones, tablets, and smartwatches are generally collectively referred to as mobile devices. Further, although the various data storage elements are illustrated as part of the computer 500, the storage may also or alternatively include cloud-based storage accessible via a network, such as the Internet.

Memory 503 may include volatile memory 514 and nonvolatile memory 508. Computer 500 may include - or have access to a computing environment that includes - a variety of computer-readable media, such as volatile memory 514 and nonvolatile memory 508, removable storage 510 and non-removable storage 512. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 500 may include or have access to a computing environment that includes input 506, output 504, and a communication connection 516. Output 504 may include a display device, such as a touchscreen, that also may serve as an input device. The input 506 may include one or more of a touchscreen, touchpad, mouse, keyboard, camera, one or more device-specific buttons, one or more sensors integrated within or coupled via wired or wireless data connections to the computer 500, and other input devices. The computer may operate in a networked environment using a communication connection to connect to one or more remote computers, such as database servers. The remote computer may include a personal computer (PC), server, router, network PC, a peer device or other common network node, or the like. The communication connection may include a Local Area Network (LAN), a Wide Area Network (WAN), cellular, WiFi, Bluetooth, or other networks.

Computer-readable instructions stored on a computer-readable medium are executable by the processing unit 502 of the computer 500. A hard drive, CD-ROM, and RAM are some examples of articles including a non-transitory computer-readable medium such as a storage device. The terms computer-readable medium and storage device do not include carrier waves. For example, a computer program 518 capable of providing a generic technique to perform access control check for data access and/or for doing an operation on one of the servers in a component object model (COM) based system may be included on a CD-ROM and loaded from the CD-ROM to a hard drive. The computer-readable instructions allow computer 500 to provide generic access controls in a COM based computer network system having multiple users and servers.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

To supplement the present disclosure, this application incorporates entirely by reference the following patents, patent application publications, and patent applications:
U.S. Patent No. 6,832,725; U.S. Patent No. 7,128,266;
U.S. Patent No. 7,159,783; U.S. Patent No. 7,413,127;
U.S. Patent No. 7,726,575; U.S. Patent No. 8,294,969;
U.S. Patent No. 8,317,105; U.S. Patent No. 8,322,622;
U.S. Patent No. 8,366,005; U.S. Patent No. 8,371,507;
U.S. Patent No. 8,376,233; U.S. Patent No. 8,381,979;
U.S. Patent No. 8,390,909; U.S. Patent No. 8,408,464;
U.S. Patent No. 8,408,468; U.S. Patent No. 8,408,469;
U.S. Patent No. 8,424,768; U.S. Patent No. 8,448,863;
U.S. Patent No. 8,457,013; U.S. Patent No. 8,459,557;
U.S. Patent No. 8,469,272; U.S. Patent No. 8,474,712;
U.S. Patent No. 8,479,992; U.S. Patent No. 8,490,877;
U.S. Patent No. 8,517,271; U.S. Patent No. 8,523,076;
U.S. Patent No. 8,528,818; U.S. Patent No. 8,544,737;
U.S. Patent No. 8,548,242; U.S. Patent No. 8,548,420;
U.S. Patent No. 8,550,335; U.S. Patent No. 8,550,354;
U.S. Patent No. 8,550,357; U.S. Patent No. 8,556,174;
U.S. Patent No. 8,556,176; U.S. Patent No. 8,556,177;
U.S. Patent No. 8,559,767; U.S. Patent No. 8,599,957;
U.S. Patent No. 8,561,895; U.S. Patent No. 8,561,903;
U.S. Patent No. 8,561,905; U.S. Patent No. 8,565,107;
U.S. Patent No. 8,571,307; U.S. Patent No. 8,579,200;
U.S. Patent No. 8,583,924; U.S. Patent No. 8,584,945;
U.S. Patent No. 8,587,595; U.S. Patent No. 8,587,697;
U.S. Patent No. 8,588,869; U.S. Patent No. 8,590,789;
U.S. Patent No. 8,596,539; U.S. Patent No. 8,596,542;
U.S. Patent No. 8,596,543; U.S. Patent No. 8,599,271;
U.S. Patent No. 8,599,957; U.S. Patent No. 8,600,158;
U.S. Patent No. 8,600,167; U.S. Patent No. 8,602,309;
U.S. Patent No. 8,608,053; U.S. Patent No. 8,608,071;
U.S. Patent No. 8,611,309; U.S. Patent No. 8,615,487;
U.S. Patent No. 8,616,454; U.S. Patent No. 8,621,123;
U.S. Patent No. 8,622,303; U.S. Patent No. 8,628,013;
U.S. Patent No. 8,628,015; U.S. Patent No. 8,628,016;
U.S. Patent No. 8,629,926; U.S. Patent No. 8,630,491;
U.S. Patent No. 8,635,309; U.S. Patent No. 8,636,200;
U.S. Patent No. 8,636,212; U.S. Patent No. 8,636,215;
U.S. Patent No. 8,636,224; U.S. Patent No. 8,638,806;
U.S. Patent No. 8,640,958; U.S. Patent No. 8,640,960;
U.S. Patent No. 8,643,717; U.S. Patent No. 8,646,692;
U.S. Patent No. 8,646,694; U.S. Patent No. 8,657,200;
U.S. Patent No. 8,659,397; U.S. Patent No. 8,668,149;
U.S. Patent No. 8,678,285; U.S. Patent No. 8,678,286;
U.S. Patent No. 8,682,077; U.S. Patent No. 8,687,282;
U.S. Patent No. 8,692,927; U.S. Patent No. 8,695,880;
U.S. Patent No. 8,698,949; U.S. Patent No. 8,717,494;
U.S. Patent No. 8,717,494; U.S. Patent No. 8,720,783;
U.S. Patent No. 8,723,804; U.S. Patent No. 8,723,904;
U.S. Patent No. 8,727,223; U.S. Patent No. D702,237;
U.S. Patent No. 8,740,082; U.S. Patent No. 8,740,085;
U.S. Patent No. 8,746,563; U.S. Patent No. 8,750,445;
U.S. Patent No. 8,752,766; U.S. Patent No. 8,756,059;
U.S. Patent No. 8,757,495; U.S. Patent No. 8,760,563;
U.S. Patent No. 8,763,909; U.S. Patent No. 8,777,108;
U.S. Patent No. 8,777,109; U.S. Patent No. 8,779,898;
U.S. Patent No. 8,781,520; U.S. Patent No. 8,783,573;
U.S. Patent No. 8,789,757; U.S. Patent No. 8,789,758;
U.S. Patent No. 8,789,759; U.S. Patent No. 8,794,520;
U.S. Patent No. 8,794,522; U.S. Patent No. 8,794,525;
U.S. Patent No. 8,794,526; U.S. Patent No. 8,798,367;
U.S. Patent No. 8,807,431; U.S. Patent No. 8,807,432;
U.S. Patent No. 8,820,630; U.S. Patent No. 8,822,848;
U.S. Patent No. 8,824,692; U.S. Patent No. 8,824,696;
U.S. Patent No. 8,842,849; U.S. Patent No. 8,844,822;
U.S. Patent No. 8,844,823; U.S. Patent No. 8,849,019;
U.S. Patent No. 8,851,383; U.S. Patent No. 8,854,633;
U.S. Patent No. 8,866,963; U.S. Patent No. 8,868,421;
U.S. Patent No. 8,868,519; U.S. Patent No. 8,868,802;
U.S. Patent No. 8,868,803; U.S. Patent No. 8,870,074;
U.S. Patent No. 8,879,639; U.S. Patent No. 8,880,426;
U.S. Patent No. 8,881,983; U.S. Patent No. 8,881,987;
U.S. Patent No. 8,903,172; U.S. Patent No. 8,908,995;
U.S. Patent No. 8,910,870; U.S. Patent No. 8,910,875;
U.S. Patent No. 8,914,290; U.S. Patent No. 8,914,788;
U.S. Patent No. 8,915,439; U.S. Patent No. 8,915,444;
U.S. Patent No. 8,916,789; U.S. Patent No. 8,918,250;
U.S. Patent No. 8,918,564; U.S. Patent No. 8,925,818;
U.S. Patent No. 8,939,374; U.S. Patent No. 8,942,480;
U.S. Patent No. 8,944,313; U.S. Patent No. 8,944,327;
U.S. Patent No. 8,944,332; U.S. Patent No. 8,950,678;
U.S. Patent No. 8,967,468; U.S. Patent No. 8,971,346;
U.S. Patent No. 8,976,030; U.S. Patent No. 8,976,368;
U.S. Patent No. 8,978,981; U.S. Patent No. 8,978,983;
U.S. Patent No. 8,978,984; U.S. Patent No. 8,985,456;
U.S. Patent No. 8,985,457; U.S. Patent No. 8,985,459;
U.S. Patent No. 8,985,461; U.S. Patent No. 8,988,578;
U.S. Patent No. 8,988,590; U.S. Patent No. 8,991,704;
U.S. Patent No. 8,996,194; U.S. Patent No. 8,996,384;
U.S. Patent No. 9,002,641; U.S. Patent No. 9,007,368;
U.S. Patent No. 9,010,641; U.S. Patent No. 9,015,513;
U.S. Patent No. 9,016,576; U.S. Patent No. 9,022,288;
U.S. Patent No. 9,030,964; U.S. Patent No. 9,033,240;
U.S. Patent No. 9,033,242; U.S. Patent No. 9,036,054;
U.S. Patent No. 9,037,344; U.S. Patent No. 9,038,911;
U.S. Patent No. 9,038,915; U.S. Patent No. 9,047,098;
U.S. Patent No. 9,047,359; U.S. Patent No. 9,047,420;
U.S. Patent No. 9,047,525; U.S. Patent No. 9,047,531;
U.S. Patent No. 9,053,055; U.S. Patent No. 9,053,378;
U.S. Patent No. 9,053,380; U.S. Patent No. 9,058,526;
U.S. Patent No. 9,064,165; U.S. Patent No. 9,064,167;
U.S. Patent No. 9,064,168; U.S. Patent No. 9,064,254;
U.S. Patent No. 9,066,032; U.S. Patent No. 9,070,032;
U.S. Design Patent No. D716,285;
U.S. Design Patent No. D723,560;
U.S. Design Patent No. D730,357;
U.S. Design Patent No. D730,901;
U.S. Design Patent No. D730,902;
U.S. Design Patent No. D733,112;
U.S. Design Patent No. D734,339;
International Publication No. 2013/163789;
International Publication No. 2013/173985;
International Publication No. 2014/019130;
International Publication No. 2014/110495;
U.S. Patent Application Publication No. 2008/0185432;
U.S. Patent Application Publication No. 2009/0134221;
U.S. Patent Application Publication No. 2010/0177080;
U.S. Patent Application Publication No. 2010/0177076;
U.S. Patent Application Publication No. 2010/0177707;
U.S. Patent Application Publication No. 2010/0177749;
U.S. Patent Application Publication No. 2010/0265880;
U.S. Patent Application Publication No. 2011/0202554;
U.S. Patent Application Publication No. 2012/0111946;
U.S. Patent Application Publication No. 2012/0168511;
U.S. Patent Application Publication No. 2012/0168512;
U.S. Patent Application Publication No. 2012/0193423;
U.S. Patent Application Publication No. 2012/0203647;
U.S. Patent Application Publication No. 2012/0223141;
U.S. Patent Application Publication No. 2012/0228382;
U.S. Patent Application Publication No. 2012/0248188;
U.S. Patent Application Publication No. 2013/0043312;
U.S. Patent Application Publication No. 2013/0082104;
U.S. Patent Application Publication No. 2013/0175341;
U.S. Patent Application Publication No. 2013/0175343;
U.S. Patent Application Publication No. 2013/0257744;
U.S. Patent Application Publication No. 2013/0257759;
U.S. Patent Application Publication No. 2013/0270346;
U.S. Patent Application Publication No. 2013/0287258;
U.S. Patent Application Publication No. 2013/0292475;
U.S. Patent Application Publication No. 2013/0292477;
U.S. Patent Application Publication No. 2013/0293539;
U.S. Patent Application Publication No. 2013/0293540;
U.S. Patent Application Publication No. 2013/0306728;
U.S. Patent Application Publication No. 2013/0306731;
U.S. Patent Application Publication No. 2013/0307964;
U.S. Patent Application Publication No. 2013/0308625;
U.S. Patent Application Publication No. 2013/0313324;
U.S. Patent Application Publication No. 2013/0313325;
U.S. Patent Application Publication No. 2013/0342717;
U.S. Patent Application Publication No. 2014/0001267;
U.S. Patent Application Publication No. 2014/0008439;
U.S. Patent Application Publication No. 2014/0025584;
U.S. Patent Application Publication No. 2014/0034734;
U.S. Patent Application Publication No. 2014/0036848;
U.S. Patent Application Publication No. 2014/0039693;
U.S. Patent Application Publication No. 2014/0042814;
U.S. Patent Application Publication No. 2014/0049120;
U.S. Patent Application Publication No. 2014/0049635;
U.S. Patent Application Publication No. 2014/0061306;
U.S. Patent Application Publication No. 2014/0063289;
U.S. Patent Application Publication No. 2014/0066136;
U.S. Patent Application Publication No. 2014/0067692;
U.S. Patent Application Publication No. 2014/0070005;
U.S. Patent Application Publication No. 2014/0071840;
U.S. Patent Application Publication No. 2014/0074746;
U.S. Patent Application Publication No. 2014/0076974;
U.S. Patent Application Publication No. 2014/0078341;
U.S. Patent Application Publication No. 2014/0078345;
U.S. Patent Application Publication No. 2014/0097249;
U.S. Patent Application Publication No. 2014/0098792;
U.S. Patent Application Publication No. 2014/0100813;
U.S. Patent Application Publication No. 2014/0103115;
U.S. Patent Application Publication No. 2014/0104413;
U.S. Patent Application Publication No. 2014/0104414;
U.S. Patent Application Publication No. 2014/0104416;
U.S. Patent Application Publication No. 2014/0104451;
U.S. Patent Application Publication No. 2014/0106594;
U.S. Patent Application Publication No. 2014/0106725;
U.S. Patent Application Publication No. 2014/0108010;
U.S. Patent Application Publication No. 2014/0108402;
U.S. Patent Application Publication No. 2014/0110485;
U.S. Patent Application Publication No. 2014/0114530;
U.S. Patent Application Publication No. 2014/0124577;
U.S. Patent Application Publication No. 2014/0124579;
U.S. Patent Application Publication No. 2014/0125842;
U.S. Patent Application Publication No. 2014/0125853;
U.S. Patent Application Publication No. 2014/0125999;
U.S. Patent Application Publication No. 2014/0129378;
U.S. Patent Application Publication No. 2014/0131438;
U.S. Patent Application Publication No. 2014/0131441;
U.S. Patent Application Publication No. 2014/0131443;
U.S. Patent Application Publication No. 2014/0131444;
U.S. Patent Application Publication No. 2014/0131445;
U.S. Patent Application Publication No. 2014/0131448;
U.S. Patent Application Publication No. 2014/0133379;
U.S. Patent Application Publication No. 2014/0136208;
U.S. Patent Application Publication No. 2014/0140585;
U.S. Patent Application Publication No. 2014/0151453;
U.S. Patent Application Publication No. 2014/0152882;
U.S. Patent Application Publication No. 2014/0158770;
U.S. Patent Application Publication No. 2014/0159869;
U.S. Patent Application Publication No. 2014/0166755;
U.S. Patent Application Publication No. 2014/0166759;
U.S. Patent Application Publication No. 2014/0168787;
U.S. Patent Application Publication No. 2014/0175165;
U.S. Patent Application Publication No. 2014/0175172;
U.S. Patent Application Publication No. 2014/0191644;
U.S. Patent Application Publication No. 2014/0191913;
U.S. Patent Application Publication No. 2014/0197238;
U.S. Patent Application Publication No. 2014/0197239;
U.S. Patent Application Publication No. 2014/0197304;
U.S. Patent Application Publication No. 2014/0214631;
U.S. Patent Application Publication No. 2014/0217166;
U.S. Patent Application Publication No. 2014/0217180;
U.S. Patent Application Publication No. 2014/0231500;
U.S. Patent Application Publication No. 2014/0232930;
U.S. Patent Application Publication No. 2014/0247315;
U.S. Patent Application Publication No. 2014/0263493;
U.S. Patent Application Publication No. 2014/0263645;
U.S. Patent Application Publication No. 2014/0267609;
U.S. Patent Application Publication No. 2014/0270196;
U.S. Patent Application Publication No. 2014/0270229;
U.S. Patent Application Publication No. 2014/0278387;
U.S. Patent Application Publication No. 2014/0278391;
U.S. Patent Application Publication No. 2014/0282210;
U.S. Patent Application Publication No. 2014/0284384;
U.S. Patent Application Publication No. 2014/0288933;
U.S. Patent Application Publication No. 2014/0297058;
U.S. Patent Application Publication No. 2014/0299665;
U.S. Patent Application Publication No. 2014/0312121;
U.S. Patent Application Publication No. 2014/0319220;
U.S. Patent Application Publication No. 2014/0319221;
U.S. Patent Application Publication No. 2014/0326787;
U.S. Patent Application Publication No. 2014/0332590;
U.S. Patent Application Publication No. 2014/0344943;
U.S. Patent Application Publication No. 2014/0346233;
U.S. Patent Application Publication No. 2014/0351317;
U.S. Patent Application Publication No. 2014/0353373;
U.S. Patent Application Publication No. 2014/0361073;
U.S. Patent Application Publication No. 2014/0361082;
U.S. Patent Application Publication No. 2014/0362184;
U.S. Patent Application Publication No. 2014/0363015;
U.S. Patent Application Publication No. 2014/0369511;
U.S. Patent Application Publication No. 2014/0374483;
U.S. Patent Application Publication No. 2014/0374485;
U.S. Patent Application Publication No. 2015/0001301;
U.S. Patent Application Publication No. 2015/0001304;
U.S. Patent Application Publication No. 2015/0003673;
U.S. Patent Application Publication No. 2015/0009338;
U.S. Patent Application Publication No. 2015/0009610;
U.S. Patent Application Publication No. 2015/0014416;
U.S. Patent Application Publication No. 2015/0021397;
U.S. Patent Application Publication No. 2015/0028102;
U.S. Patent Application Publication No. 2015/0028103;
U.S. Patent Application Publication No. 2015/0028104;
U.S. Patent Application Publication No. 2015/0029002;
U.S. Patent Application Publication No. 2015/0032709;
U.S. Patent Application Publication No. 2015/0039309;
U.S. Patent Application Publication No. 2015/0039878;
U.S. Patent Application Publication No. 2015/0040378;
U.S. Patent Application Publication No. 2015/0048168;
U.S. Patent Application Publication No. 2015/0049347;
U.S. Patent Application Publication No. 2015/0051992;
U.S. Patent Application Publication No. 2015/0053766;
U.S. Patent Application Publication No. 2015/0053768;
U.S. Patent Application Publication No. 2015/0053769;
U.S. Patent Application Publication No. 2015/0060544;
U.S. Patent Application Publication No. 2015/0062366;
U.S. Patent Application Publication No. 2015/0063215;
U.S. Patent Application Publication No. 2015/0063676;
U.S. Patent Application Publication No. 2015/0069130;
U.S. Patent Application Publication No. 2015/0071819;
U.S. Patent Application Publication No. 2015/0083800;
U.S. Patent Application Publication No. 2015/0086114;
U.S. Patent Application Publication No. 2015/0088522;
U.S. Patent Application Publication No. 2015/0096872;
U.S. Patent Application Publication No. 2015/0099557;
U.S. Patent Application Publication No. 2015/0100196;
U.S. Patent Application Publication No. 2015/0102109;
U.S. Patent Application Publication No. 2015/0115035;
U.S. Patent Application Publication No. 2015/0127791;
U.S. Patent Application Publication No. 2015/0128116;
U.S. Patent Application Publication No. 2015/0129659;
U.S. Patent Application Publication No. 2015/0133047;
U.S. Patent Application Publication No. 2015/0134470;
U.S. Patent Application Publication No. 2015/0136851;
U.S. Patent Application Publication No. 2015/0136854;
U.S. Patent Application Publication No. 2015/0142492;
U.S. Patent Application Publication No. 2015/0144692;
U.S. Patent Application Publication No. 2015/0144698;
U.S. Patent Application Publication No. 2015/0144701;
U.S. Patent Application Publication No. 2015/0149946;
U.S. Patent Application Publication No. 2015/0161429;
U.S. Patent Application Publication No. 2015/0169925;
U.S. Patent Application Publication No. 2015/0169929;
U.S. Patent Application Publication No. 2015/0178523;
U.S. Patent Application Publication No. 2015/0178534;
U.S. Patent Application Publication No. 2015/0178535;
U.S. Patent Application Publication No. 2015/0178536;
U.S. Patent Application Publication No. 2015/0178537;
U.S. Patent Application Publication No. 2015/0181093;
U.S. Patent Application Publication No. 2015/0181109;
U.S. Patent Application No. 13/367,978 for a *Laser Scanning Module Employing an Elastomeric U-Hinge Based Laser Scanning Assembly,* filed February 7, 2012 (Feng et *al.);*
U.S. Patent Application No. 29/458,405 for an *Electronic Device,* filed June 19, 2013 (Fitch et *al.);*
U.S. Patent Application No. 29/459,620 for an *Electronic Device Enclosure,* filed July 2, 2013 (London et *al.);*
U.S. Patent Application No. 29/468,118 for an *Electronic Device Case,* filed September 26, 2013 (Oberpriller et *al.);*
U.S. Patent Application No. 14/150,393 for *Indicia-reader Having Unitary Construction Scanner,* filed January 8, 2014 (Colavito et al.);
U.S. Patent Application No. 14/200,405 for *Indicia Reader for Size-Limited Applications* filed March 7, 2014 (Feng et *al.);*
U.S. Patent Application No. 14/231,898 for *Hand-Mounted Indicia-Reading Device with Finger Motion Triggering* filed April 1, 2014 (Van Horn et al.);
U.S. Patent Application No. 29/486,759 for an Imaging Terminal, filed April 2, 2014 (Oberpriller et al.);
U.S. Patent Application No. 14/257,364 for *Docking System and Method Using Near Field Communication* filed April 21, 2014 (Showering);
U.S. Patent Application No. 14/264,173 for *Autofocus Lens System for Indicia Readers* filed April 29, 2014 (Ackley et *al.);*
U.S. Patent Application No. 14/277,337 *for MULTIPURPOSE OPTICAL READER, filed May 14, 2014 (Jovanovski* et *al.);*
U.S. Patent Application No. 14/283,282 *for TERMINAL HAVING ILLUMINATION AND FOCUS CONTROL filed May 21, 2014 (Liu et al.);*
U.S. Patent Application No. 14/327,827 for a MOBILE-PHONE ADAPTER FOR ELECTRONIC TRANSACTIONS, filed July 10, 2014 (Hejl);
U.S. Patent Application No. 14/334,934 for a SYSTEM AND METHOD FOR INDICIA VERIFICATION, filed July 18, 2014 (Hejl);
U.S. Patent Application No. 14/339,708 for LASER SCANNING CODE SYMBOL READING SYSTEM, filed July 24, 2014 (Xian et al.);
U.S. Patent Application No. 14/340,627 for an AXIALLY REINFORCED FLEXIBLE SCAN ELEMENT, filed July 25, 2014 (Rueblinger et al.);
U.S. Patent Application No. 14/446,391 for MULTIFUNCTION POINT OF SALE APPARATUS WITH OPTICAL SIGNATURE CAPTURE filed July 30, 2014 (Good et al.);
U.S. Patent Application No. 14/452,697 for INTERACTIVE INDICIA READER, filed August 6, 2014 (Todeschini);
U.S. Patent Application No. 14/453,019 for DIMENSIONING SYSTEM WITH GUIDED ALIGNMENT, filed August 6, 2014 (Li et al.);
U.S. Patent Application No. 14/462,801 for MOBILE COMPUTING DEVICE WITH DATA COGNITION SOFTWARE, filed on August 19, 2014 (Todeschini et al.);
U.S. Patent Application No. 14/483,056 for VARIABLE DEPTH OF FIELD BARCODE SCANNER filed Sep. 10, 2014 (McCloskey et al.);
U.S. Patent Application No. 14/513,808 for IDENTIFYING INVENTORY ITEMS IN A STORAGE FACILITY filed Oct. 14, 2014 (Singel et al.);
U.S. Patent Application No. 14/519,195 for HANDHELD DIMENSIONING SYSTEM WITH FEEDBACK filed Oct. 21, 2014 (Laffargue et al.);
U.S. Patent Application No. 14/519,179 for DIMENSIONING SYSTEM WITH MULTIPATH INTERFERENCE MITIGATION filed Oct. 21, 2014 (Thuries et al.);
U.S. Patent Application No. 14/519,211 for SYSTEM AND METHOD FOR DIMENSIONING filed Oct. 21, 2014 (Ackley et al.);
U.S. Patent Application No. 14/519,233 for HANDHELD DIMENSIONER WITH DATA-QUALITY INDICATION filed Oct. 21, 2014 (Laffargue et al.);
U.S. Patent Application No. 14/519,249 for HANDHELD DIMENSIONING SYSTEM WITH MEASUREMENT-CONFORMANCE FEEDBACK filed Oct. 21, 2014 (Ackley et al.);
U.S. Patent Application No. 14/527,191 for METHOD AND SYSTEM FOR RECOGNIZING SPEECH USING WILDCARDS IN AN EXPECTED RESPONSE filed Oct. 29, 2014 (Braho et al.);
U.S. Patent Application No. 14/529,563 for ADAPTABLE INTERFACE FOR A MOBILE COMPUTING DEVICE filed Oct. 31, 2014 (Schoon et al.);
U.S. Patent Application No. 14/529,857 for BARCODE READER WITH SECURITY FEATURES filed October 31, 2014 (Todeschini et al.);
U.S. Patent Application No. 14/398,542 for PORTABLE ELECTRONIC DEVICES HAVING A SEPARATE LOCATION TRIGGER UNIT FOR USE IN CONTROLLING AN APPLICATION UNIT filed November 3, 2014 (Bian et al.);
U.S. Patent Application No. 14/531,154 for DIRECTING AN INSPECTOR THROUGH AN INSPECTION filed Nov. 3, 2014 (Miller et al.);
U.S. Patent Application No. 14/533,319 for BARCODE SCANNING SYSTEM USING WEARABLE DEVICE WITH EMBEDDED CAMERA filed Nov. 5, 2014 (Todeschini);
U.S. Patent Application No. 14/535,764 for CONCATENATED EXPECTED RESPONSES FOR SPEECH RECOGNITION filed Nov. 7, 2014 (Braho et al.);
U.S. Patent Application No. 14/568,305 for AUTO-CONTRAST VIEWFINDER FOR AN INDICIA READER filed Dec. 12, 2014 (Todeschini);
U.S. Patent Application No. 14/573,022 for DYNAMIC DIAGNOSTIC INDICATOR GENERATION filed Dec. 17, 2014 (Goldsmith);
U.S. Patent Application No. 14/578,627 for SAFETY SYSTEM AND METHOD filed Dec. 22, 2014 (Ackley et al.);
U.S. Patent Application No. 14/580,262 for MEDIA GATE FOR THERMAL TRANSFER PRINTERS filed Dec. 23, 2014 (Bowles);
U.S. Patent Application No. 14/590,024 for SHELVING AND PACKAGE LOCATING SYSTEMS FOR DELIVERY VEHICLES filed January 6, 2015 (Payne);
U.S. Patent Application No. 14/596,757 for SYSTEM AND METHOD FOR DETECTING BARCODE PRINTING ERRORS filed Jan. 14, 2015 (Ackley);
U.S. Patent Application No. 14/416,147 for OPTICAL READING APPARATUS HAVING VARIABLE SETTINGS filed January 21, 2015 (Chen et al.);
U.S. Patent Application No. 14/614,706 for DEVICE FOR SUPPORTING AN ELECTRONIC TOOL ON A USER'S HAND filed Feb. 5, 2015 (Oberpriller et al.);
U.S. Patent Application No. 14/614,796 for CARGO APPORTIONMENT TECHNIQUES filed Feb. 5, 2015 (Morton et al.);
U.S. Patent Application No. 29/516,892 for TABLE COMPUTER filed Feb. 6, 2015 (Bidwell et al.);
U.S. Patent Application No. 14/619,093 for METHODS FOR TRAINING A SPEECH RECOGNITION SYSTEM filed Feb. 11, 2015 (Pecorari);
U.S. Patent Application No. 14/628,708 for DEVICE, SYSTEM, AND METHOD FOR DETERMINING THE STATUS OF CHECKOUT LANES filed Feb. 23, 2015 (Todeschini);
U.S. Patent Application No. 14/630,841 for TERMINAL INCLUDING IMAGING ASSEMBLY filed Feb. 25, 2015 (Gomez et al.);
U.S. Patent Application No. 14/635,346 for SYSTEM AND METHOD FOR RELIABLE STORE-AND-FORWARD DATA HANDLING BY ENCODED INFORMATION READING TERMINALS filed March 2, 2015 (Sevier);
U.S. Patent Application No. 29/519,017 for SCANNER filed March 2, 2015 (Zhou et al.);
U.S. Patent Application No. 14/405,278 for DESIGN PATTERN FOR SECURE STORE filed March 9, 2015 (Zhu et al.);
U.S. Patent Application No. 14/660,970 for DECODABLE INDICIA READING TERMINAL WITH COMBINED ILLUMINATION filed March 18, 2015 (Kearney et al.);
U.S. Patent Application No. 14/661,013 for REPROGRAMMING SYSTEM AND METHOD FOR DEVICES INCLUDING PROGRAMMING SYMBOL filed March 18, 2015 (Soule et al.);
U.S. Patent Application No. 14/662,922 for MULTIFUNCTION POINT OF SALE SYSTEM filed March 19, 2015 (Van Horn et al.);
U.S. Patent Application No. 14/663,638 for VEHICLE MOUNT COMPUTER WITH CONFIGURABLE IGNITION SWITCH BEHAVIOR filed March 20, 2015 (Davis et al.);
U.S. Patent Application No. 14/664,063 for METHOD AND APPLICATION FOR SCANNING A BARCODE WITH A SMART DEVICE WHILE CONTINUOUSLY RUNNING AND DISPLAYING AN APPLICATION ON THE SMART DEVICE DISPLAY filed March 20, 2015 (Todeschini);
U.S. Patent Application No. 14/669,280 for TRANSFORMING COMPONENTS OF A WEB PAGE TO VOICE PROMPTS filed March 26, 2015 (Funyak et al.);
U.S. Patent Application No. 14/674,329 for AIMER FOR BARCODE SCANNING filed March 31, 2015 (Bidwell);
U.S. Patent Application No. 14/676,109 for INDICIA READER filed April 1, 2015 (Huck);
U.S. Patent Application No. 14/676,327 for DEVICE MANAGEMENT PROXY FOR SECURE DEVICES filed April 1, 2015 (Yeakley et al.);
U.S. Patent Application No. 14/676,898 for NAVIGATION SYSTEM CONFIGURED TO INTEGRATE MOTION SENSING DEVICE INPUTS filed April 2, 2015 (Showering);
U.S. Patent Application No. 14/679,275 for DIMENSIONING SYSTEM CALIBRATION SYSTEMS AND METHODS filed April 6, 2015 (Laffargue et al.);
U.S. Patent Application No. 29/523,098 for HANDLE FOR A TABLET COMPUTER filed April 7, 2015 (Bidwell et al.);
U.S. Patent Application No. 14/682,615 for SYSTEM AND METHOD FOR POWER MANAGEMENT OF MOBILE DEVICES filed April 9, 2015 (Murawski et al.);
U.S. Patent Application No. 14/686,822 for MULTIPLE PLATFORM SUPPORT SYSTEM AND METHOD filed April 15, 2015 (Qu et al.);
U.S. Patent Application No. 14/687,289 for SYSTEM FOR COMMUNICATION VIA A PERIPHERAL HUB filed April 15, 2015 (Kohtz et al.);
U.S. Patent Application No. 29/524,186 for SCANNER filed April 17, 2015 (Zhou et al.);
U.S. Patent Application No. 14/695,364 for MEDICATION MANAGEMENT SYSTEM filed April 24, 2015 (Sewell et al.);
U.S. Patent Application No. 14/695,923 for SECURE UNATTENDED NETWORK AUTHENTICATION filed April 24, 2015 (Kubler et al.);
U.S. Patent Application No. 29/525,068 for TABLET COMPUTER WITH REMOVABLE SCANNING DEVICE filed April 27, 2015 (Schulte et al.);
U.S. Patent Application No. 14/699,436 for SYMBOL READING SYSTEM HAVING PREDICTIVE DIAGNOSTICS filed April 29, 2015 (Nahill et al.);
U.S. Patent Application No. 14/702,110 for SYSTEM AND METHOD FOR REGULATING BARCODE DATA INJECTION INTO A RUNNING APPLICATION ON A SMART DEVICE filed May 1, 2015 (Todeschini et al.);
U.S. Patent Application No. 14/702,979 for TRACKING BATTERY CONDITIONS filed May 4, 2015 (Young et al.);
U.S. Patent Application No. 14/704,050 for INTERMEDIATE LINEAR POSITIONING filed May 5, 2015 (Charpentier et al.);
U.S. Patent Application No. 14/705,012 for HANDS-FREE HUMAN MACHINE INTERFACE RESPONSIVE TO A DRIVER OF A VEHICLE filed May 6, 2015 (Fitch et al.);
U.S. Patent Application No. 14/705,407 for METHOD AND SYSTEM TO PROTECT SOFTWARE-BASED NETWORK-CONNECTED DEVICES FROM ADVANCED PERSISTENT THREAT filed May 6, 2015 (Hussey et al.);
U.S. Patent Application No. 14/707,037 for SYSTEM AND METHOD FOR DISPLAY OF INFORMATION USING A VEHICLE-MOUNT COMPUTER filed May 8, 2015 (Chamberlin);
U.S. Patent Application No. 14/707,123 for APPLICATION INDEPENDENT DEX/UCS INTERFACE filed May 8, 2015 (Pape);
U.S. Patent Application No. 14/707,492 for METHOD AND APPARATUS FOR READING OPTICAL INDICIA USING A PLURALITY OF DATA SOURCES filed May 8, 2015 (Smith et al.);
U.S. Patent Application No. 14/710,666 for PRE-PAID USAGE SYSTEM FOR ENCODED INFORMATION READING TERMINALS filed May 13, 2015 (Smith);
U.S. Patent Application No. 29/526,918 for CHARGING BASE filed May 14, 2015 (Fitch et al.);
U.S. Patent Application No. 14/715,672 for AUGUMENTED REALITY ENABLED HAZARD DISPLAY filed May 19, 2015 (Venkatesha et al.);
U.S. Patent Application No. 14/715,916 for EVALUATING IMAGE VALUES filed May 19, 2015 (Ackley);
U.S. Patent Application No. 14/722,608 for INTERACTIVE USER INTERFACE FOR CAPTURING A DOCUMENT IN AN IMAGE SIGNAL filed May 27, 2015 (Showering et al.);
U.S. Patent Application No. 29/528,165 for IN-COUNTER BARCODE SCANNER filed May 27, 2015 (Oberpriller et al.);
U.S. Patent Application No. 14/724,134 for ELECTRONIC DEVICE WITH WIRELESS PATH SELECTION CAPABILITY filed May 28, 2015 (Wang et al.);
U.S. Patent Application No. 14/724,849 for METHOD OF PROGRAMMING THE DEFAULT CABLE INTERFACE SOFTWARE IN AN INDICIA READING DEVICE filed May 29, 2015 (Barten);
U.S. Patent Application No. 14/724,908 for IMAGING APPARATUS HAVING IMAGING ASSEMBLY filed May 29, 2015 (Barber et al.);
U.S. Patent Application No. 14/725,352 for APPARATUS AND METHODS FOR MONITORING ONE OR MORE PORTABLE DATA TERMINALS (Caballero et al.);
U.S. Patent Application No. 29/528,590 for ELECTRONIC DEVICE filed May 29, 2015 (Fitch et al.);
U.S. Patent Application No. 29/528,890 for MOBILE COMPUTER HOUSING filed June 2, 2015 (Fitch et al.);
U.S. Patent Application No. 14/728,397 for DEVICE MANAGEMENT USING VIRTUAL INTERFACES CROSS-REFERENCE TO RELATED APPLICATIONS filed June 2, 2015 (Caballero);
U.S. Patent Application No. 14/732,870 for DATA COLLECTION MODULE AND SYSTEM filed June 8, 2015 (Powilleit);
U.S. Patent Application No. 29/529,441 for INDICIA READING DEVICE filed June 8, 2015 (Zhou et al.);
U.S. Patent Application No. 14/735,717 for INDICIA-READING SYSTEMS HAVING AN INTERFACE WITH A USER'S NERVOUS SYSTEM filed June 10, 2015 (Todeschini);
U.S. Patent Application No. 14/738,038 for METHOD OF AND SYSTEM FOR DETECTING OBJECT WEIGHING INTERFERENCES filed June 12, 2015 (Amundsen et al.);
U.S. Patent Application No. 14/740,320 for TACTILE SWITCH FOR A MOBILE ELECTRONIC DEVICE filed June 16, 2015 (Bandringa);
U.S. Patent Application No. 14/740,373 for CALIBRATING A VOLUME DIMENSIONER filed June 16, 2015 (Ackley et al.);
U.S. Patent Application No. 14/742,818 for INDICIA READING SYSTEM EMPLOYING DIGITAL GAIN CONTROL filed June 18, 2015 (Xian et al.);
U.S. Patent Application No. 14/743,257 for WIRELESS MESH POINT PORTABLE DATA TERMINAL filed June 18, 2015 (Wang et al.);
U.S. Patent Application No. 29/530,600 for CYCLONE filed June 18, 2015 (Vargo et al);
U.S. Patent Application No. 14/744,633 for IMAGING APPARATUS COMPRISING IMAGE SENSOR ARRAY HAVING SHARED GLOBAL SHUTTER CIRCUITRY filed June 19, 2015 (Wang);
U.S. Patent Application No. 14/744,836 for CLOUD-BASED SYSTEM FOR READING OF DECODABLE INDICIA filed June 19, 2015 (Todeschini et al.);
U.S. Patent Application No. 14/745,006 for SELECTIVE OUTPUT OF DECODED MESSAGE DATA filed June 19, 2015 (Todeschini et al.);
U.S. Patent Application No. 14/747,197 for OPTICAL PATTERN PROJECTOR filed June 23, 2015 (Thuries et al.);
U.S. Patent Application No. 14/747,490 for DUAL-PROJECTOR THREE-DIMENSIONAL SCANNER filed June 23, 2015 (Jovanovski et al.); and
U.S. Patent Application No. 14/748,446 for CORDLESS INDICIA READER WITH A MULTIFUNCTION COIL FOR WIRELESS CHARGING AND EAS DEACTIVATION, filed June 24, 2015 (Xie et al.).

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. A method comprising:
obtaining an image of a device having an augmented reality target viewable in the image of the device;
generating an augmented reality image; and
displaying the augmented reality image on the image of the device responsive to the augmented reality target to provide an augmented reality view.

2. The method of claim 1 wherein the step of obtaining an image of a device having an augmented reality target viewable in the image of the device comprises obtaining a real-time camera feed of a device having an augmented reality target viewable in the image of the device.

3. The method of claim 1 and further comprising:
determining a distortion of the augmented reality target; and
adjusting the image to account for the determined distortion prior to displaying the augmented reality image.

4. The method of claim 1 wherein the augmented reality image is positioned on the augmented reality target.

5. The method of claim 1 wherein the augmented reality image corresponds to a screen of information generated by an application executing on an augmented reality device performing the method.

6. The method of claim 1 wherein the augmented reality target comprises multiple targets, and wherein displaying the augmented reality image comprises multiple images positioned on the multiple targets.

7. The method of claim 6 wherein at least one of the augmented reality images gives a corresponding target an appearance of an input icon.

8. The method of claim 7 wherein the device comprises a glove.

9. The method of claim 8 wherein the input icon is displayed on the glove, and wherein movement of the glove, or a portion thereof, operates as a selection of the input icon.

10. The method of claim 8 wherein the input icon is displayed on a finger of the glove, and wherein movement of the finger in a selected direction and distance, or obscuring the finger, operates as a selection of the input icon.

11. The method of claim 8 wherein the augmented reality image corresponds to a screen of information that is displayed on a palm of the glove.

12. The method of claim 8 wherein the augmented reality image corresponds to a screen of information that is displayed on a back of the glove.

13. A system comprising:
a processor;
a camera coupled to the processor to provide images to the processor; and
a memory coupled to the processor and having a program stored thereon for execution by the processor to:
obtain an image of a device having an augmented reality target viewable in the image of the device;
generate an augmented reality image; and
display the augmented reality image on the image of the device responsive to the augmented reality target to provide an augmented reality view.

14. The system of claim 13 wherein the program further causes the processor to:
determine a distortion of the augmented reality target; and
adjust the image to account for the determined distortion prior to displaying the augmented reality image.

15. The system of claim 13 wherein the augmented reality image is positioned on the augmented reality target and wherein the augmented reality image corresponds to a screen of information generated by an application stored in the memory and executing on the processor.
